(19) Europäisches Patentamt

European Patent Office

Office européen des brevets

(11) **EP 1 762 069 B1**

(12) **EUROPEAN PATENT SPECIFICATION**

(45) Date of publication and mention
of the grant of the patent:
**14.01.2009 Bulletin 2009/03**

(51) Int Cl.:
**H04L 29/06** (2006.01)    **G06F 11/34** (2006.01)
**G06F 9/46** (2006.01)    **G06F 9/50** (2006.01)

(21) Application number: **04740434.8**

(86) International application number:
**PCT/EP2004/007049**

(22) Date of filing: **29.06.2004**

(87) International publication number:
**WO 2006/002659 (12.01.2006 Gazette 2006/02)**

(54) **METHOD OF SELECTING ONE SERVER OUT OF A SERVER SET**

VERFAHREN ZUR AUSWAHL EINES SERVERS AUS EINER SERVERMENGE

PROCEDE DE SELECTION D'UN SERVEUR PARMI UN ENSEMBLE DE SERVEURS

(84) Designated Contracting States:
**AT BE BG CH CY CZ DE DK EE ES FI FR GB GR
HU IE IT LI LU MC NL PL PT RO SE SI SK TR**

(43) Date of publication of application:
**14.03.2007 Bulletin 2007/11**

(73) Proprietor: **Nokia Siemens Networks GmbH & Co.
KG
81541 München (DE)**

(72) Inventors:
• **BOZINOVSKI, Marjan
Skopje (MK)**
• **REICH, Manfred
85244 Röhrmoos (DE)**
• **SEIDL, Robert
82549 Königsdorf (DE)**

(56) References cited:
**US-A1- 2003 101 258**

• **R. STEWART ET AL: "Aggregate Server Access
Protocol" INTERNET-DRAFT, [Online] 9 June
2004 (2004-06-09), pages 1-43, XP002308317 IETF
Retrieved from the Internet: URL:http:
//www.watersprings.org/pub/id/dra ft-ietf-
rserpool-asap-09.txt> [retrieved on 2004-11-30]**

• **HOFMANN R ET AL: "DISTRIBUTED
PERFORMANCE MONITORING: METHODS,
TOOLS, AND APPLICATIONS" IEEE
TRANSACTIONS ON PARALLEL AND
DISTRIBUTED SYSTEMS, IEEE INC, NEW YORK,
US, vol. 5, no. 6, 1 June 1994 (1994-06-01), pages
585-598, XP000450482 ISSN: 1045-9219**

• **Q. XIE ET AL: "RSERPOOL Redundancy-model
Policy" INTERNET DRAFT, [Online] 7 April 2004
(2004-04-07), pages 1-10, XP002308318 IETF
Retrieved from the Internet: URL:http:
//www.watersprings.org/pub/id/dra ft-xie-
rserpool-redundancy-model-02.txt> [retrieved on
2004-11-30]**

• **M. TUEXEN ET AL: "Architecture for Reliable
Server Pooling" INTERNET DRAFT, [Online] 12
October 2003 (2003-10-12), pages 1-22,
XP002308320 IETF Retrieved from the Internet:
URL:http://www.watersprings.org/pub/id/dra ft-
ietf-rserpool-arch-07.txt> [retrieved on
2004-11-30]**

• **FECKO M A ET AL: "Designing reliable server
pools for battlefield ad-hoc networks" 6TH
WORLD MULTICONFERENCE ON SYSTEMICS,
CYBERNETICS AND INFORMATICS.
PROCEEDINGS INT. INST. INF. & SYST
ORLANDO, FL, USA, vol. 10, 18 June 2002
(2002-06-18), pages 1-6, XP002308321 ISBN:
980-07-8150-1**

**Description**

The invention relates to a method of selecting one server out of a server set for the purpose of requesting one or more service/s, for example related to at least one internet- and session-based application, each of the servers of the server set being capable of supporting the service/s.

R. Stewart et. al. : « Aggregate Server Access Protocol » Internet Draft, [Online] 9 June 2004 (2004-06-09), pages 1-43, XP002308317 IETF Retrieved from the Internet : URL : http://www.watersprings.org/pub/id/draft-ietf-rserpool-asap-09.txt> [retrieved on 2004-11-30] describes, that a Aggregate Server Access Protocol (ASAP) in conjunction with the Endpoint Name Resolution Protocol (ENRP) provides a high availability data transfer mechanism over IP Networks. ASAP uses a name-based addressing model which isolates a logical communication endpoint from its IP address(es), thus effectively eliminating the binding between the communication endpoint and its physical IP address (es) which normally constitutes a single point of failure.

Hofmann R et. al : « Distributed Performance Monitoring : Methods, Tools, and Applications » IEEE Transactions on Parallel and Distributed Systems, IEEE Inc, New York, US, vol. 5, no. 6, 1 June 1994 (1994-06-01), pages 585-598, XP000450482, ISSN: 1045-9219 describes a method for analyzing the functional behavior and the performance of programs in distributed systems. The document uses hybrid monitoring, a technique which combines advantages of both software monitoring and hardware monitoring. The paper contains a description of a hardware monitor and a software package which make the concepts available to programmers, assisting them in debugging and tuning of their code. A short survey of related monitor systems highlights the distinguishing features of the implementation. As an application of the monitoring and evaluation system, the analysis of a parallel ray tracing program running on the Suprenum multiprocessor is described.

The Document US 2003/0101258 A1 discloses a method for monitoring replica servers in a networked computer system, in which each server in the system has a replica partner vector table that includes state information about other servers in the system. The replica partner vector table includes data fields for storing an update sequence number and timestamp information that identifies the time of the last update and/or the time last successful replication attempt for each replica server in the system. After each successful replication, the server updates the entries in the replica partner vector to reflect the updated USN and timestamp information. The replica monitoring method evaluates the USN and timestamp entries in the replica partner vector table to determine if any servers in the system are latent. If the monitoring method detects that a server in the system is latent, an alert is generated whereby users and/or a network administrator are informed of the problem.

Session management (control) gains increasing importance as the number and popularity of internet services based on the session notion rapidly grows. Session-based services comprise multimedia conferences, internet telephone calls and similar applications consisting of one or more media types such as audio, video, etc. Deployment examples include the session control services as part of the IP multimedia subsystem (IMS), in 3$^{rd}$ generation mobile networks. In the IMS, the call session control function (CSCF) servers perform session management, based on the session initiation protocol (SIP). Session control protocols such as SIP are transactional protocols. In general, a transaction consists of a single request and a response to that request.

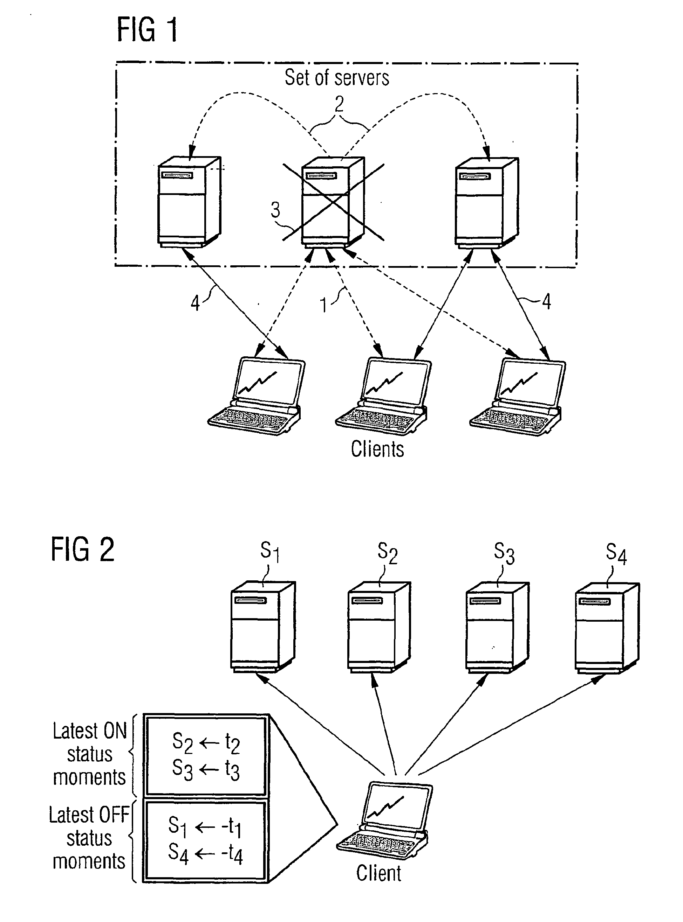

Fault-tolerance in, for example, session control systems is achieved by introducing redundancy. Namely, session control servers are multiplied in server sets. A server set consists of N servers providing the same functionality. Such a fault-tolerant replicated session control system is shown in Fig. 1.

Dashed lines 1 designate client requests sent to the central of the three servers in Fig. 1, assuming this server is currently available. Availability firstly includes that the server is running, i.e. able to provide requested services. Secondly, the server needs to be accessible or reachable via the (internet) connection between the server and its client/s.

Dashed lines 2 designate state update propagation from the central server to the two servers in the left and right position in Fig. 1. Crossed solid lines 3 are intended to illustrate failure condition of the central server. In addition, the clients will determine that requests are not responded to by the central server and will repeat their requests by directing them to the left and right servers. This is indicated by the solid lines 4, showing the fail-overs to the other "healthy" servers.

Session control is a time-critical application. Performance of session control is quantified by transaction control time. Transaction control time is the mean time between the moment of request sending and the moment of final response receipt at a user (including possible multiple fail-over to different servers). A problem which exists in session control systems is how to enhance performance, i.e., how to reduce transaction control time. The server selection policies (SSP) have the main role in minimizing transaction control time.

Existing static server selection policies use predefined schemes for selecting servers. Examples of static SSPs are:

- Round Robin designates a cyclic policy, where servers are selected in a sequential fashion until the initially selected server is selected again.

- Weighted Round Robin designates a simple extension of round robin. It assigns a certain weight to each server. The weight indicates the server's processing capacity. This SSP may also be dynamic if it can evaluate individual servers' capacities and their loads at least occasionally.

The unawareness of dynamic system states leads to low complexity, however, at the expense of degrading performance and service dependability. Adaptive (dynamic) SSPs make decisions based on changes in the system state and dynamic estimation of the best server. Examples of dynamic SSPs are:

- Smart Round Robin (SRR).
  In this SSP, a new request is sent to a server by applying round robin on the current subset of servers that have last been known to be alive. If no server has been reported to be alive, the round robin is applied to the whole server set. This algorithm deals with the binary information on the server's activity status, i.e., whether a server is up or down.
- Smart Round Robin per Session (SRR-S).
  This is a variant of SRR, which is only applied to select a server for new sessions and for mid-session requests that need to fail-over due to a missing final response. Once a server is selected, all the next requests within the session are sent to the same server until the session end or a request failure is detected.
- Least Used SSP, see R. R. Stewart, Q. Xie: Aggregate Server Access Protocol (ASAP), <draft-ietf-rserpool-asap-08.txt>, October 21, 2003, from the IETF (Internet Engineering Task Force) Working Group "Reliable Server Pooling". In this SSP, each server's load is monitored by a central monitoring entity or by the client itself. Based on monitoring the loads of the servers, each server is assigned a so-called policy value, which is proportional to the server's load. According to the Least Used SSP, the server with the lowest policy value is selected as the receiver of the current message. It is important to note that this SSP implies that the same server is always selected until the policy values of the servers are updated and changed.
- Least Used With Degradation SSP [Stewart & Xie] is the same as the Least Used SSP with one exception. Namely, each time the server with the lowest policy value is selected from the server set, its policy value is incremented. Thus, this server may no longer have the lowest policy value in the server set. This heads the Least Used With Degradation SSP towards the Round Robin SSP over time. Every update of the policy values of the servers brings the SSP back to Least Used With Degradation.

The efficiency of a dynamic SSP depends on the metric that is used to evaluate the best server. The research on SSPs has been mainly focussed on the replicated Web server systems. In such systems, the typical metrics are based on server proximity including geographic distance, number of hops to each server, round trip time (RTT) und HTTP response times, see Robert L. Carter and Mark E. Crovella, "Dynamic Server Selection using Bandwidth Probing in Wide Area Networks, in Proceedings of Infocom'97, the Sixteenth Annual Joint Conference of the IEEE Computer and Communication Societies, April 1997; Mark E. Crovella and Robert L. Carter, "Dynamic server selection in the Internet", in Proceedings of the Third IEEE Workshop on the Architecture and Implementation of High Performance Communication Subsystems (HPCS'95), August 1995; M. Sayal, Y. Breitbart, P. Scheuermann, R. Vingralek, "Selection Algorithms for Replicated Web Servers", Workshop on Internet Server Performance, Madison, Wisconsin, 1998; K. Obraczka and F. Silvia, "Network Latency Metrics for Server Proximity", in Proceedings of the IEEE Globecom, November 2000.

While SSPs in Web systems aim at providing high throughput and small service latency, session control protocols such as SIP deal with messages being small in size (500 bytes on average). Thus, throughput might not be an as significant metric as in the Web systems. To the best of the author's knowledge, SSPs have not been extensively investigated with the session control systems.

In light of the above, it is an object of the invention to propose a method of selecting one server out of a set of servers which is improved over the prior art SSPs in its ability to reduce transaction control times, and to propose a client device to implement such an improved method.

This problem is solved by a method according to claim 1 and a client device according to claim 12.

One of the essential ideas underlying the invention is that session requests should preferably be sent to a server that provides the highest instantaneous availability, i.e. highest availability at the point of time a request is to be sent. Thereby the average number of attempted servers until success can be minimized and a reduced transaction control time can be achieved.

The invention is based on maximizing the instantaneous probability of successful transaction with the $n^{th}$ request retransmission, under the condition that (n-1) attempts have been unsuccessful. Hence, the invention is referred to as maximum availability (MA) SSP.

According to the inventive MA algorithm, the or each client keeps a status vector denoted as p. The size of the status vector is N (i.e., equal to the number of servers in the set):

$$p = [p_1, p_2, \ldots, p_n]$$

A certain element in the status vector represents the last known status moment or point of time of the particular server. If the last server's status was ON (up), the corresponding timestamp value is stored in the status vector.

If the last server's status was OFF (down), the corresponding timestamp value is stored in the status vector with a negative sign. The basic algorithm selects the server that has the maximum timestamp value in the status vector. According to a modified embodiment of the invention, a server is selected that has a timestamp value within some range of the maximum timestamp value.

To update the status vector in a client, one or any combination of the following three options is to be implemented in the client:

1) When a transaction sent to a given server is successfully completed or failed.

2) When a heart-beat sent to a given server is successfully completed or failed.

A heartbeat mechanism provides for a periodical or in any other way regularly repeated poll to thereby proactively monitor the status of the given server. The poll might be based for example on the ICMP echo request and echo reply mechanism, well known as ping mechanism, or on messages dedicated for that purpose, e. g. the Heartbeat-Message and Heartbeat-Ack-Message according to R. Stewart, et al.: Stream Control Transmission Protocol, RFC 2960, October 2000, from the IETF (Internet Engineering Task Force) Working Group "Signaling Transport" or the Keep-Alive-Message and Keep-Alive-Ack-message according to the ASAP-protocol [Stewart & Xie].

A transaction (or a heart-beat) is failed if the client has not received a response to the request (or the heart-beat request) within a time interval defined by a timeout. Whenever a new status moment or point of time $t_i$ associated to server $S_i$ is obtained (when a transaction or heart-beat having been sent to a given server is successfully completed or failed), the entry associated to server $S_i$ in the vector p is updated as follows:

$$p_i = \begin{cases} t_i, & server \quad is \ reported \quad to \ be \ up \ at \ t_i \\ -t_i, & server \quad is \ reported \quad to \ be \ down \quad at \ t_i \end{cases} i \in \{1, \ldots, N\}$$

3) By contacting a third party, e.g. a special server or another client that keeps and updates an own status vector for the given server set. During communication with the third party, e.g. using a specialized protocol, the client gets the current or up-to-date status vector of the third party. By using the status data received from the third party, the client updates its local status vector. The client does not update an entry in its local status vector if that entry is newer (more up-to-date) than the corresponding entry in the status data retrieved from the third party. The clocks in the client and the third party used for measuring the timestamps have to be synchronized, for example by deploying the network time protocol (NTP), to denote the same point of time by the same timestamp (synchronizing might also be achieved by correcting a timestamp delivered from a third party, for example assuming a constant time shift or drift with respect to the third party, requiring a corresponding algorithm).

The MA SSP is based on the assumption that the server whose last known up time is closest to the actual time is most likely to be up at the actual time. For example, this assumption is satisfied when the ON and OFF intervalls are random variables that have exponential probability density functions.

The MA SSP completes a session transaction with the server that has the highest instantaneous probability of successful transaction, thereby minimizing the average number of attempted servers until success. This reduces the transaction control time.

Within a further developed embodiment of the invention it is possible to additionally reduce transaction control time. This MA extension is based on minimizing the application response time with the currently selected server. Application response time is the time duration between the moment of request sending to a given server and the moment of the final response receipt at the client. For that purpose, the client keeps additional status data, the so-called delay vector denoted as d. The size of the delay vector is also N:

$$d = [d_1, d_2, \ldots, d_N]$$

A certain element in the delay vector represents the application response time a transaction (the last one sent to that server) has experienced with that server. If the transaction has not been successful, the application response time for that server is considered infinite.

Note, that the two vectors p and d are equivalent to and can be represented by one status vector s, whose elements consists of timestamp and delay data:

$$s = [(p_1, d_1), (p_2, d_2), ..., (p_n, d_n)]$$

Since this MA extension introduces additional status data besides the availability timestamp, another server selection decision criterion based on the two vectors may be applied.

There can be derived several possible criteria. Two preferred embodiments of the invention deploying specific criteria are given in the following:

1) Criterion with a predefined threshold for delay vector elements

This criterion defines a delay threshold for the delay vector elements. The delay threshold represents the maximum tolerated application response time. The rule for selecting a server is as follows:

- Identify the subset of servers whose delay vector entries are below the delay threshold;
- If such subset exists, apply the basic MA algorithm on that subset, i.e., select the server with the largest status vector entry,
- if such subset does not exist, apply the basic MA algorithm on the overall server set.

2) Criterion with a predefined timestamp range

This criterion defines a timestamp range for the status vector elements. The timestamp range is the duration of the time interval whose upper bound is equal to the largest entry value in the status vector (if such exists). The idea is to only select among those servers, which have been available in a certain time interval counting backwards from the largest timestamp. The rule for selecting a server is as follows:

- Identify the subset of servers whose status vector entries are positive and fall within the interval defined by the timestamp range;
- If such subset exists, select the server with the smallest delay vector entry,
- if such subset does not exist, apply the basic MA algorithm on the overall server set.

The advantages of the invention are the following:

- Significant performance improvements as opposed to classical SSPs such as Round Robin.

- MA is an efficient server selection policy.

- MA has a low implementation complexity. A client should only keep a status vector with as many elements as servers in the server set.

- The MA SSP does not require high processing power.

- MA can be implemented as a dynamic and adaptive algorithm, which possesses the ability to naturally and rapidly detect the fastest server in a set, even when the traffic loads are rather heavy.

Further aspects and advantages of the invention can be derived from the dependent claims as well as the subsequent description of several embodiments of the invention with respect to the appended drawings, showing:

Fig. 1   a schematic illustration of a fault-tolerant replicated session control system (already discussed);

Fig. 2   a schematic drawing illustrating an example of a server selection process according to an embodiment of the invention;

Fig. 3    a simplified block diagram showing functional blocks of a client device according to the invention.

Fig. 2 is a schematic drawing illustrating an example of a server selection process according to an embodiment of the invention. The Client makes a decision on which server is to be selected. As an example, the server set consists of 4 servers S1 to S4. At the moment the selection decision is made, the status vector contains entries for each of the servers S1 to S4, namely the timestamp values denoted by t1, t2, t3 and t4, representing the moments when the servers S1, S2, S3 and S4 were last time accessed, respectively. In the memory of the client, the timestamp values t1 to t4 are stored as numbers represented by bit strings. In the example illustrated in Fig. 2, S2 is assumed to have the largest (positive) time stamp, while S4 has the smallest (negative) time stamp.

The stored status vector is looked up at the client. According to the selection rule of the embodiment of the invention implemented in the client, the maximum timestamp value in the status vector is determined and the corresponding server is selected. Thus S2 is selected for serving the current transaction. Note that the transaction is reattempted with another server selected according to the same rule if S2 fails during the transaction processing. Then, the next attempt would be directed towards S3, as S3 has the second largest (positive)timestamp value after S2.

As an example for the inventive server selection method deploying a status vector with an availability timestamp in conjunction with a delay value per element, consider again four servers S1 to S4 in a server set. At a given time, let the timestamp values including availability information ('-' sign in case of server down) and the delay values be p = [-8.3 s, 11.2 s, 14.1 s, 13.5 s] and d = [∞, 0.08 s, 0.55 s, 0.15 s], respectively, for the servers S1 - S4 and let a delay threshold value be set to 0.2 s.

According to the criterion outlined above, first the servers whose delay vector entries are below the delay threshold have to be identified. These are the servers S2 and S4. Further, as a subset of servers with delay values below the threshold exists, the basic MA algorithm has to be applied, i.e. the server with the largest status vector entry is to be selected. Thus, as server S4 has the largest status vector entry from the set fulfilling the delay condition, server S4 is selected to serve the actual transaction.

As an example for the inventive server selection method deploying a predefined timestamp range value, consider once again four servers S1 - S4. Let again the timestamp value with availability information and the delay values of the servers S1 to S4 be p = [-8.3 s, 11.2 s, 14.1 s, 13.5 s] and d = [∞, 0,08 s, 0.55 s, 0.15 s] and let the timestamp range be set to 3 s.

According to the criterion outlined above, first the subset of servers whose status vector entries are positive and fall within the interval defined by the timestamp range have to be identified. The subset comprises the servers S2, S3 and S4. Further, as a subset exists, (no fallback to the basic MA algorithm is required and) the server with the smallest delay vector entry is to be selected. Thus, as server S2 has the smallest delay vector entry, S2 is selected to serve the actual transaction.

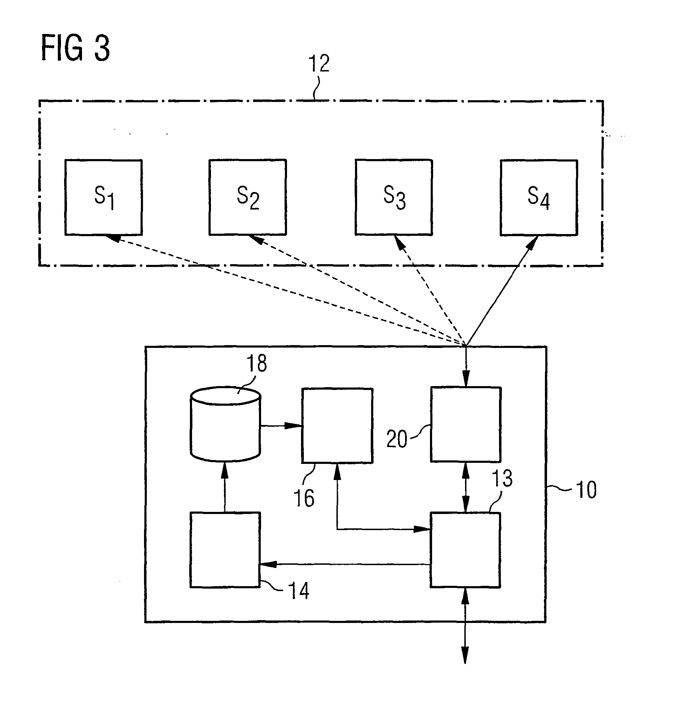

Fig. 3 is a simplified block diagram illustrating essential functional blocks of a client device 10 going to request a service from a server set 12. The client device 10 can be hardware or firmware, but is preferably implemented as a client software block on a (user) device (not shown), for example a mobile device. The server farm 12 is assumed to provide SIP-based applications within the context of the IP multimedia platform (IMS) of a UMTS-network the mobile device is attached to. For providing the applications or services in a fault-tolerant fashion, the server set 12 comprises four servers S1 to S4, each of these being fully adapted to provide any of the services which could be requested by the mobile device hosting the client device 10.

The client device 10 comprises a control module 13, a status vector management module 14, a server selection module 16, a memory 18 and a client module 20. The memory is assumed to be a part or section of a larger memory of the device hosting the client device 10, but can also be a piece of memory hardware dedicated to the client device 10.

With respect to Fig. 3, subsequently a server selection process according to the invention is described in more detail based on a status vector with an availability timestamp in conjunction with a delay value per element (2nd example described above).

Initially, the control module 13 is triggered by some unit external to the client device 10 in order to request a service from the server set 12, i.e. to initiate the build-up of a session under the control of one of the CSCF-servers S1 to S4. The triggering unit can be associated to a multimedia application on the mobile device.

It is assumed that the transport (IP) addresses and ports of each of the servers S1 to S4 are known in the client device 10. This might be achieved by the control module 13 by requesting a name resolution list regarding a name of the server set 12 from a name server (not shown), or in some other way.

Besides this and other actions, the control module sends a command to the server selection module 16 to read out the status vector from the memory 18 and apply the rules related to the maximum availability server selection policy according to the invention to the status vector elements.

The status vector contains four elements, one element for each of the servers S1 to S4. Each element might contain some information related to the corresponding server (for example the transport address discussed above), but in particular includes a status information related to the corresponding server. Regarding the status information, the status vector s can be represented as a vector s of pairs, s = [(-8.3, ∞), (11.2, 0.08), (14.1, 0.55), (13.5, 0.15)], where the numbers are stored in the memory 18 as bit strings and represent time values in units of seconds.

Any minus sign of the availability information, i.e. the timestamp value as a negative number value can be represented in memory according to any procedure known to the skilled person, including for example a representation of the negative timestamp value as complement on two by inverting all bits and adding 1.

The example values are taken from the 2$^{nd}$ example discussed above. The first value of each pair (,) is a timestamp value, the second value of each pair a delay value.

Having read in the status vector, the server selection module 16 performs a first operation on all second values of the status information pairs of the status vector elements, i.e. the delay values: Each of the delay values are compared to a constant, namely a delay threshold value, which in this example has been set once at the time of implementation of the client device 10. It is also possible to have the delay threshold value changed, for example by the control module 13, but not during a server selection procedure as described here.

As a result of the discrimination, each status information pair having a delay value being below the delay threshold value is copied, together with an association information designating the corresponding server, into a subset vector. This vector thus contains status information pertaining to all servers of the server set, whose transaction delay is shorter than the predetermined threshold delay. In the example discussed, the subset vector thus contains the status information of servers S2 and S4.

The server selection module 16 further operates on the subset vector by applying the basic MA algorithm. In case no subset would have been identified, because of all delay values being larger than the delay threshold value, the module 16 is adapted to apply the basic MA algorithm to the status vector itself.

Due to the basic MA algorithm, the first value of each status information pair in the subset vector is scanned and the status information pair is identified which has the maximum of these first values. In other words, the server is identified which has the maximum timestamp value as evaluated including the availability information (the '-' sign), if any. In the example, the first subset vector element has a timestamp value of 11.2 s, the second element has 13.5 s (no explicit availability information in both elements). Thus, the second subset vector element is designated.

As this element corresponds to server S4, the server selection module identifies the transport address (and any further information associated to this element), and returns the transport address to the control module 13 as a response. The control module uses the returned information to initiate assembling and sending of a service request to the identified server (S4) via the client module 20. The request is illustrated as solid line in Fig. 3.

It is assumed that the server S4 responds to the request and the service related transaction is successfully completed at a point of time designated as 15.3 s as measured inside the host device. The delay in responding to the request was 0.37 s. According to the embodiment of inventive method as described here, the status vector stored in the memory 18 has to be updated by associating the new timestamp and delay values with the transport address of server S4.

To achieve this, the control module triggers the status vector management module 14 upon sending of the request via the client module 20 to server S4. Due to the trigger the management module 14 firstly determines the current time by requesting to a clock module inside the host device (not shown), the clock module returning a string representing (in the example) the value of 14.93 s. Secondly, the module 14 starts a timer dedicated to this particular request. The timer runs a predetermined time of 10s.

The control module 13 sends another trigger to the management module 14 upon reception of the final response of the server S4. Due to the second trigger, the management module 14 firstly determines again the current time by requesting to the clock module which returns a string representing (in the example) the value of 15.3 s. Secondly, the management module 14 stops the timer.

Next, the management module prepares the new status information pair ((optional availability information) timestamp value, delay value). As the second trigger has been received before timer stop, no availability information has to be associated to the timestamp. The timestamp value is taken as the second time string received from the clock module. The delay value is calculated by subtracting the first time string from the second time string, leading to a delay value of 0.37 s.

If the server S4 did not respond, no second trigger would arrive at the status management module 14. Then the timer runs out after 10 seconds. At that point of time the module 14 also sends its second request to the clock module, leading to the second time string representing the point of time the timer has run out. Further the module 14 prepares a status vector element for server S4 with availability information '-', a timestamp as given by the second time string returned from the clock module and a delay value given by the device-specific representation of the number value 'indefinite' or '∞'. A second trigger arriving after timer stop is not handled by the management module 14, but is discarded.

Eventually, the management module 14 stores the assembled status information pair in the status vector stored in memory 18 at the fourth position, i.e. the position associated to the transport address of server S4. Regarding status information, assuming the service related transaction is successfully completed, the updated status vector thus reads s = [(-8.3, ∞), (11.2, 0.08), (14.1, 0.55), (15.3, 0.37)].

The specific examples described herein illustrate just few appropriate embodiments of the invention. Within the scope of the invention, which is exclusively specified by the appended claims, by skilled action many further embodiments are possible.

For example, the status vector management module (reference numeral 14 in Fig. 3) and the server selection module (16) have been described as being separate entities in the client device (10). It is understood by the skilled person that these modules can be implemented as a single module also.

List of reference numerals

| S1 - S4 | Servers of server set |
|---------|----------------------|
| t1 - t4 | Timestamp values in the status vector |

| 10 | client device |
|----|---------------|
| 12 | server set |
| 13 | control module |
| 14 | Status vector management module |
| 16 | server selection module |
| 18 | Memory |
| 20 | client module |

**Claims**

1. A method for a client selecting one server (S1 - S4) out of a server set (12) for the purpose of requesting one or more service/s, for example related to at least one internet- and session-based application, each of the servers (S1 - S4) of the server set (12) being capable of supporting the service/s, the method comprising the steps:

   - maintaining a status vector, thereby assigning at least two elements of the status vector a status information, each status information representing a status of one of the servers (S1 - S4) of the server set (12),
   - selecting a server (S1 - S4) by applying a predetermined selection rule to the status information of elements of the status vector and
   - requesting the service/s from the selected server (S1 - S4),

   **characterized in that**

   - the status information comprises a timestamp value (t1 - t4) indicating a point of time at which the status of the corresponding server (S1 - S4) is determined,
   - the status information further comprises a delay value indicating an application response time of the corresponding server,
   - the selection rule comprises the step of determining a subset of the elements of the status vector, the subset including those elements the delay value of which are below a predetermined delay threshold value,
   - the selection rule comprises the step of determining the maximum timestamp value in the subset of the status vector elements and of selecting the corresponding server (S1 - S4).

2. The method according to claim 1,
   **characterized in that**
   the status information comprises an availability information, indicating the availability of the corresponding server (S1 - S4), associated to the timestamp value (t1, t4 in Fig. 2).

3. The method according to claim 2,
   **characterized in that**
   the availability information is represented by a minus sign in case the corresponding server (S1, S4 in Fig. 2) is not available.

4. The method according to any one of the preceding claims,
   **characterized by**
   the step of assigning status information to a particular element of the status vector in response to completion or failure of a transaction with the corresponding server (S1 - S4).

5. The method according to any one of the preceding claims,
**characterized by**
the step of assigning status information to a particular element of the status vector in response to completion or failure of a heartbeat interconnection to the corresponding server (S1 - S4).

6. The method according to any one of the preceding claims,
**characterized by**
the step of assigning status information to a particular element or elements of the status vector in response to a reception of third party status information from a third party for one or more servers (S1 - S4) of the server set (12).

7. The method according to any one of the preceding claims,
**characterized in that**
the selection rule comprises the step of determining a subset of the elements of the status vector, the subset including those elements the timestamp values of which are a positive number and, when subtracted from a maximum of the timestamp values, lead to a value less than a predetermined timestamp range value.

8. The method according to claim 7,
**characterized in that**
the selection rule comprises the step of determining the minimum delay value in the subset of the status vector elements and of selecting the corresponding server (S1 - S4).

9. A client device comprising means adapted to carry out each of the steps of the method of one of the preceding claims

**Patentansprüche**

1. Verfahren für einen Client zur Auswahl eines Servers (S1-S4) aus einer Server-Menge (12) für den Zweck des Anforderns eines oder mehrerer Dienste zum Beispiel in bezug auf mindestens eine internet- und sitzungsgestützte Anwendung, wobei jeder der Server (S1-S4) der Server-Menge (12) den Dienst bzw. die Dienste unterstützen kann, wobei das Verfahren die folgenden Schritte umfaßt:

   - Unterhalten eines Statusvektors, wodurch mindestens zwei Elementen des Statusvektors eine Statusinformation zugewiesen wird, wobei jede Statusinformation einen Status eines der Server (S1- S4) der Server-Menge (12) repräsentiert,
   - Auswählen eines Servers (S1-S4) durch Anwenden einer vorbestimmten Auswahlregel auf die Statusinformation von Elementen des Statusvektors und
   - Anfordern des Dienstes bzw. der Dienste von dem gewählten Server (S1-S4),

   **dadurch gekennzeichnet, daß**

   - die Statusinformation einen Zeitstempelwert (t1-t4) umfaßt, der einen Zeitpunkt angibt, zu dem der Status des entsprechenden Servers (S1-S4) bestimmt wird,
   - die Statusinformation ferner einen Verzögerungswert umfaßt, der eine Anwendungsansprechzeit des entsprechenden Servers repräsentiert,
   - die Auswahlregel den Schritt des Bestimmens einer Teilmenge der Elemente des Statusvektors umfaßt, wobei die Teilmenge die Elemente enthält, deren Verzögerungswert unter einem vorbestimmten Schwellenwert liegt,
   - die Auswahlregel den Schritt des Bestimmens des größten Zeitstempelwerts in der Teilmenge der Statusvektorelemente und des Auswählens des entsprechenden Servers (S1-S4) umfaßt.

2. Verfahren nach Anspruch 1, **dadurch gekennzeichnet, daß**
die Statusinformation eine Verfügbarkeitsinformation umfaßt, die die Verfügbarkeit des entsprechenden Servers (S1-S4) angibt, der mit dem Zeitstempelwert (t1, t4 in Fig. 2) assoziiert ist.

3. Verfahren nach Anspruch 2, **dadurch gekennzeichnet, daß**
die Verfügbarkeitsinformation durch ein Minuszeichen repräsentiert wird, falls der entsprechende Server (S1, S4 in Fig. 2) nicht verfügbar ist.

**4.** Verfahren nach einem der vorhergehenden Ansprüche, **gekennzeichnet durch** den Schritt des Zuweisens von Statusinformationen zu einem bestimmten Element des Statusvektors als Reaktion auf den Abschluß oder das Fehlschlagen einer Transaktion mit dem entsprechenden Server (S1-S4).

**5.** Verfahren nach einem der vorhergehenden Ansprüche, **gekennzeichnet durch** den Schritt des Zuweisens von Statusinformationen zu einem bestimmten Element des Statusvektors als Reaktion auf den Abschluß oder das Fehlschlagen einer Heartbeat-Verbindung mit dem entsprechenden Server (S1-S4).

**6.** Verfahren nach einem der vorhergehenden Ansprüche, **gekennzeichnet durch** den Schritt des Zuweisens von Statusinformationen zu einem bestimmten Element oder Elementen des Statusvektors als Reaktion auf den Empfang von Statusinformationen Dritter von einem Dritten für einen oder mehrere Server (S1-S4) der Server-Menge (12).

**7.** Verfahren nach einem der vorhergehenden Ansprüche, **dadurch gekennzeichnet, daß** die Auswahlregel den Schritt des Bestimmens einer Teilmenge der Elemente des Statusvektors umfaßt, wobei die Teilmenge die Elemente enthält, deren Zeitstempelwerte eine positive Zahl sind und, wenn sie von einem Maximum der Zeitstempelwerte subtrahiert werden, zu einem Wert kleiner als ein vorbestimmter Zeitstempel-Bereichswert führen.

**8.** Verfahren nach Anspruch 7, **dadurch gekennzeichnet, daß** die Auswahlregel den Schritt des Bestimmens des kleinsten Verzögerungswerts in der Teilmenge der Statusvektorelemente und des Auswählens des entsprechenden Servers (S1-S4) umfaßt.

**9.** Client-Einrichtung mit Mitteln, die dafür ausgelegt sind, die Schritte des Verfahrens nach einem der vorhergehenden Ansprüche auszuführen.

**Revendications**

**1.** Procédé de sélection, par un client, d'un serveur (S1

- S4) parmi un ensemble de serveurs (12) dans le but de demander un ou plusieurs service/s, par exemple en relation avec au moins une application basée sur Internent - et sur une session -, chacun des serveurs (S1 - S4) de l'ensemble de serveurs (12) étant capable de supporter le/s service/s, le procédé comprenant les étapes:
- maintenir un vecteur de statut, assignant ainsi une information de statut à au moins deux éléments du vecteur de statut, chaque information de statut représentant un statut de l'un des serveurs (S1 - S4) de l'ensemble de serveurs (12),
- sélectionner un serveur (S1 - S4) en appliquant une règle de sélection prédéterminée à l'information de statut d'éléments du vecteur de statut et
- demander le/s service/s au serveur sélectionné (S1
- S4),

**caractérisé en ce que**

- l'information de statut comprend une valeur d'estampille temporelle (t1 - t4) indiquant un instant où le statut du serveur correspondant (S1 - S4) est déterminé,
- l'information de statut comprend, en outre, une valeur de retard indiquant un temps de réponse d'application du serveur correspondant,
- la règle de sélection comprend l'étape de détermination d'un sous-ensemble des éléments du vecteur de statut, le sous-ensemble incluant les éléments dont la valeur de retard est inférieure à une valeur de seuil de retard prédéterminée,
- la règle de sélection comprend l'étape de détermination de la valeur d'estampille temporelle maximum dans le sous-ensemble des éléments de vecteur de statut et de sélection du serveur correspondant (S1 - S4).

**2.** Procédé selon la revendication 1, **caractérisé en ce que** l'information de statut comprend une information de disponibilité indiquant la disponibilité du serveur correspondant (S1 - S4), associée à la valeur d'estampille temporelle (t1, t4 dans la Figure 2).

**3.** Procédé selon la revendication 2, **caractérisé en ce que** l'information de disponibilité est représentée par un signe moins dans le cas où le serveur correspondant (S1, S4 dans la Figure 2) n'est pas disponible.

**4.** Procédé selon l'une quelconque des revendications précédentes, **caractérisé par** l'étape d'assignation d'une information de statut à un élément particulier du vecteur de statut en réponse à l'exécution ou l'échec d'une transaction avec le serveur correspondant (S1 - S4).

**5.** Procédé selon l'une quelconque des revendications précédentes, **caractérisé par** l'étape d'assignation d'une information de statut à un élément particulier du vecteur de statut en réponse à l'exécution ou l'échec d'une interconnexion "battement de coeur" avec le serveur correspondant (S1 - S4).

**6.** Procédé selon l'une quelconque des revendications précédentes, **caractérisé par** l'étape d'assignation d'une information de statut à un élément ou des éléments particulier/s du vecteur de statut en réponse à une réception d'une information de statut de tiers provenant d'un tiers pour un ou plusieurs serveur/s (S1 - S4) de l'ensemble de serveurs (12).

**7.** Procédé selon l'une quelconque des revendications précédentes, **caractérisé en ce que** la règle de sélection comprend l'étape de détermination d'un sous-ensemble des éléments du vecteur de statut, le sous-ensemble incluant les éléments dont les valeurs d'estampille temporelle sont un nombre positif et qui, lorsqu'elles sont soustraites à un maximum des valeurs d'estampille temporelle, aboutissent à une valeur inférieure à une valeur d'une gamme d'estampilles temporelles prédéterminée.

**8.** Procédé selon la revendication 7, **caractérisé en ce que** la règle de sélection comprend l'étape de détermination de la valeur de retard minimum dans le sous-ensemble des éléments de vecteur de statut et de sélection du serveur correspondant (S1 - S4).

**9.** Dispositif client comprenant un moyen adapté pour exécuter chacune des étapes du procédé de l'une des revendications précédentes.

## FIG 1

Set of servers

2

3

4

1

4

Clients

## FIG 2

$S_1$   $S_2$   $S_3$   $S_4$

Latest ON status moments

$S_2 \leftarrow t_2$
$S_3 \leftarrow t_3$

Latest OFF status moments

$S_1 \leftarrow -t_1$
$S_4 \leftarrow -t_4$

Client

FIG 3

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- US 20030101258 A1

### Non-patent literature cited in the description

- **R. STEWART.** *Aggregate Server Access Protocol,* 09 June 2004, 1-43, URL : http://www.water-springs.org/pub/id/draft-ietf-rserpool-asap-09.txt>
- Distributed Performance Monitoring : Methods, Tools, and Applications. **HOFMANN R.** IEEE Transactions on Parallel and Distributed Systems. IEEE Inc, 01 June 1994, vol. 5, 585-598
- **R. R. STEWART ; Q. XIE.** *Aggregate Server Access Protocol (ASAP,* 21 October 2003, <draft-ietf-rserpool-asap-08.txt>
- **ROBERT L. CARTER ; MARK E. CROVELLA.** Dynamic Server Selection using Bandwidth Probing in Wide Area Networks. *Proceedings of Infocom'97, the Sixteenth Annual Joint Conference of the IEEE Computer and Communication Societies,* April 1997
- **MARK E. CROVELLA ; ROBERT L. CARTER.** Dynamic server selection in the Internet. *Proceedings of the Third IEEE Workshop on the Architecture and Implementation of High Performance Communication Subsystems,* August 1995
- **M. SAYAL ; Y. BREITBART ; P. SCHEUERMANN ; R. VINGRALEK.** Selection Algorithms for Replicated Web Servers. *Workshop on Internet Server Performance,* 1998
- **K. OBRACZKA ; F. SILVIA.** Network Latency Metrics for Server Proximity. *Proceedings of the IEEE Globecom,* November 2000
- **R. STEWART et al.** *Stream Control Transmission Protocol, RFC 2960,* October 2000